# EUROPÄISCHE PATENTSCHRIFT

(11) **EP 1 565 671 B1**
(45) Veröffentlichungstag und Bekanntmachung des Hinweises auf die Patenterteilung: **24.02.2010**
(21) Anmeldenummer: 03757980.2
(22) Anmeldetag: 15.10.2003
(51) Int. Cl.: F16H 13/02, F16H 7/02, F02B 67/06, F01P 5/12

(54) **AGGREGATE-RIEMENTRIEB EINER BRENNKRAFTMASCHINE**
ACCESSORIES BELT DRIVE OF AN INTERNAL COMBUSTION ENGINE
ENTRAINEMENT A COURROIE POUR DES ACCESSOIRES D'UN MOTEUR A COMBUSTION

(30) Priorität: 26.11.2002 DE 10255075
(43) Veröffentlichungstag der Anmeldung: 24.08.2005
(73) Patentinhaber: Bayerische Motoren Werke Aktiengesellschaft, 80809 München (DE)
(72) Erfinder: LEMBERGER, Heinz, 85774 Unterföhring (DE); WIMMER, Rudolf, A-4431 Haidershofen (AT); FÖSSL, Peter, A-4441 Behamberg (AT); WIESER, Philipp, A-4521 Schiedlberg (AT)
(86) Internationale Anmeldenummer: PCT/EP2003/011404
(87) Internationale Veröffentlichungsnummer: WO 2004/048808

(56) Entgegenhaltungen:
- DE-A- 3 934 884
- GB-A- 461 603
- US-A- 1 391 572
- US-A- 2 823 546
- US-A- 4 822 321

## Beschreibung

Die Erfindung bezieht sich auf ein Aggregate-Riementrieb einer Brennkraftmaschine mit einem Reibradgetriebe mit Steuereinrichtung und Nebenaggregat, wobei das Reibradgetriebe ein in einem Umschlingungsbereich eines Riemens eines Triebrades der Brennkraftmaschine oder eines sonstigen Aggregates mit der Außenseite des Riemens reibschlüssig zusammenwirkendes Reibrad umfasst sowie ein mit diesem Reibrad reibschlüssig antreibbares Antriebsrad des gesondert angeordneten Nebenaggregates, wobei das Reibrad mittels einer Steuereinrichtung bedarfsweise in und außer Eingriff mit dem Riemen oder dem Antriebsrad gesteuert ist.

Aus der DE 39 34 884 A1 endloses Zugmittelgetriebe einer Brennkraftmaschine bekannt, bei dem der Lüfter einer Brennkraftmaschine indirekt von eine Spannrad eines Riementriebs an der Brennkraftmaschine angetrieben wird. Dazu ist das Spannrad auf einem um die Lüfterwelle chwenkbaren Schwenkbügel gelagert und drehfest mit einem Triebrad verbunden, auf dem wiederum ein mit dem Lüfter verbundenes Antriebsrad abwälzt.

In der nicht vorveröffentlichten deutschen Patentanmeldung P 102 36 746 wurde eine derartige Anordnung anhand grundsätzlicher Darstellungen beschrieben, jedoch ohne eine konkret ausgebildete Steuereinrichtung für ein ab- und zuschaltbares Reibrad für variablen Antrieb des Nebenaggregates aufzuzeigen.

Eine Steuereinrichtung mit einer aufgrund ihres technischen Konzeptes hohen Ausfallsicherheit (failsafe) bei einfachem Aufbau zu schaffen ist Aufgabe der Erfindung.

Diese Aufgabe ist mit dem Patentanspruch 1 dadurch gelöst, dass das Reibrad über einen Schwenkarm mit einem in einer brennkraftmaschinenseitig fixierten Aufnahme angeordneten Exzenter der Steuereinrichtung in Verbindung steht, wobei der Exzenter in der Aufnahme über ein Steilgewinde geführt angeordnet ist derart, dass eine aus der gegen einen Federwiderstand mittels eines Servomotors der Steuereinrichtung bewirkten Hubbewegung des Exzenters zwangsweise gekoppelte Drehbewegung des Exzenters der Steuerung des mit dem Reibrad verbundenen Schwenkarmes für eine Zu-/Abschaltung des Nebenaggregates dient.

Die Ausfallsicherheit der erfindungsgemäßen Steuereinrichtung ist mittels des über das Steilgewinde unter Federwirkung selbsttätig in eine die Zuschaltung des Nebenaggregates bewirkende Position erzielt, aus der der Exzenter mittels zugeschaltetem Servomotor in eine der Abschaltung des Nebenaggregates dienende Gegenposition zur Entfernung des Reibrades vom Nebenaggregate-Antriebsrad gesteuert ist.

Da die erfindungsgemäße Steuereinrichtung über ihre Mechanik in vorteilhafter Weise einen ständigen Eingriff des Reibrades sowohl mit dem Riemen des Riementriebes als auch mit dem Antriebsrad des Nebenaggregates bewirkt, tritt bei Ausfall des Servomotors kein für den Betrieb der Brennkraftmaschine systemschädlicher Nachteil auf. D.h. bei einem beispielsweise als Kühlmittelpumpe der Brennkraftmaschine dienenden Nebenaggregat, dass dieses z. B. bei Kaltstart der Brennkraftmaschine nicht abschaltbar ist und damit die Brennkraftmaschine lediglich mehr Leistung abgeben muss, der Kühlmittelumlauf aber in jedem Fall gesichert ist.

Vorteilhafte Ausgestaltungen der Erfindung sind in Unteransprüchen angegeben.

Die Erfindung ist anhand von in der Zeichnung dargestellten Ausführungsbeispielen beschrieben.

Es zeigt:

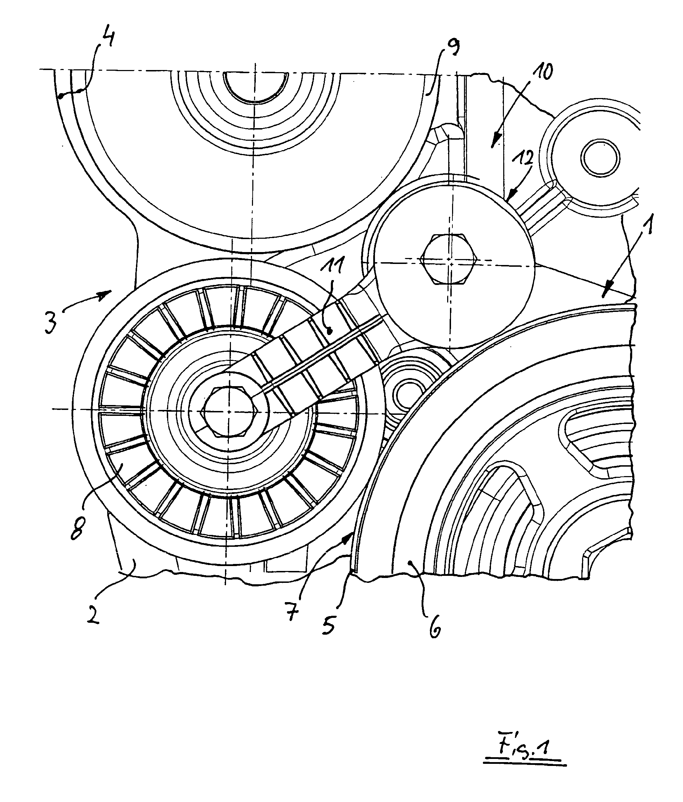

- Fig. 1: ein stirnseitig an einer abschnittsweise gezeigten Brennkraftmaschine mit einem Riementrieb zusammenwirkend angeordnetes Reibrad - getriebe für ein gesondert angeordnetes Nebenaggregat, insbesondere Kühlmittelpumpe,
- Fig.2: eine erfindungsgemäße Steuereinrichtung des Reibradgetriebes in Schnittdarstellung mit nicht aktiviertem Servomotor zum ständigen Reibradeingriff,

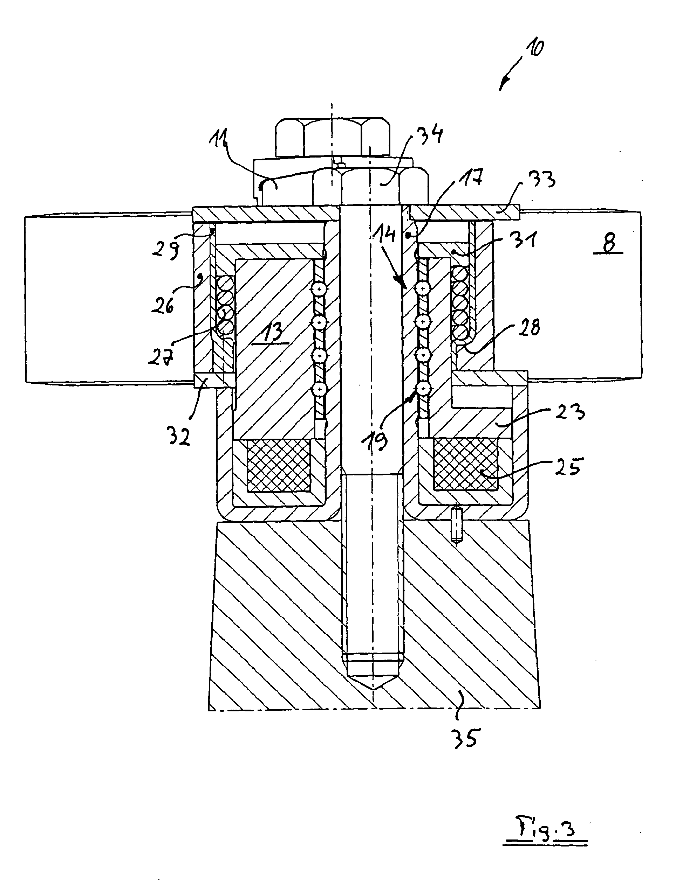

- Fig.3: die Steuereinrichtung mit aktiviertem Servomotor für unterbrochenem Reibradeingriff,

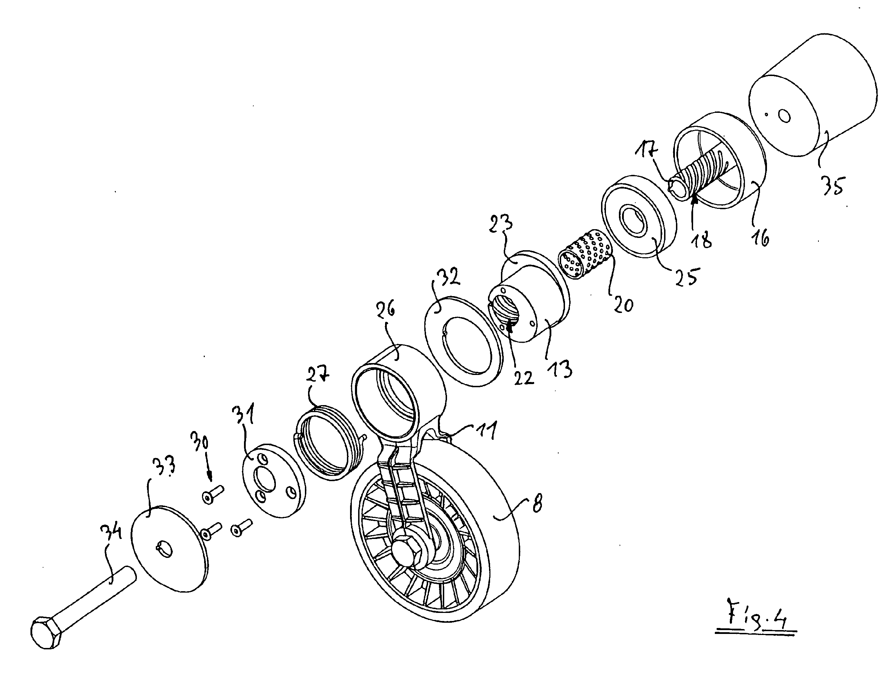

- Fig.4: die Steuereinrichtung mit das Reibrad tragenden Schwenkarm in Explosionsdarstellung,
- Fig. 5: eine Variante der Steuereinrichtung.

In einem Riementrieb 1 für nicht gezeigte Aggregate einer nur abschnittsweise dargestellten Brennkraftmaschine 2 ist ein Reibradgetriebe 3 vorgesehen für ein gesondert an der Brennkraftmaschine 2 angeordnetes Nebenaggregat 4 , das insbesondere eine Kühlmittelpumpe für den Kühlkreislauf der Brennkraftmaschine 2 ist.

Das Reibradgetriebe 3 umfasst ein in einem Umschlingungsbereich des Riemens 5 eines kurbelwellenseitigen Triebrades 6 der Brennkraftmaschine 2 mit der Außenseite 7 des Riemens 5 reibschlüssig zusammenwirkendes Reibrad 8 sowie ein mit dem Reibrad 8 reibschlüssig antreibbares Antriebsrad 9 der Kühlmittelpumpe 4. Das Reibrad 8 ist mittels einer Steuereinrichtung 10 insbesondere bei einem Kaltstart der Brennkraftmaschine 2 außer Eingriff mit dem pumpenseitigen Antriebsrad 9 gesteuert.

Zur Erzielung einer konzeptionell bedingt ausfallsicheren Steuereinrichtung 10 steht das Reibrad 8 über einen Schwenkarm 11 mit einem in einer maschinenseitig fixierten Aufnahme 12 angeordneten Exzenter 13 in Verbindung, wobei der Exzenter 13 in der Aufnahme 12 über ein Steilgewinde 14 geführt angeordnet ist derart, dass eine aus der gegen einen Federwiderstand mittels eines Servomotors 15 bewirkten Hubbewegung des Exzenters 13 zwangsweise gekoppelte Drehbewegung des Exzenters 13 der Steuerung des mit dem Reibrad 8 verbundenen Schwenkarmes 11 für eine Ab - / Zuschaltung der Kühlmittelpumpe 4 dient.

Eine kompakte und leichtgängige Steuereinrichtung 10 ist mit einer als topfartiges Gehäuse 16 gestalteten Aufnahme 12 erzielt mit einem zentrischen Rohrfortsatz 17 mit am Außenumfang angeordneten ersten Gewindegängen 18 für ein Kugelgewinde 19, wobei die in einem zylindrischen Käfig 20 gesicherten Gewindekugeln in am Innenumfang einer den Exzenter 13 durchsetzenden Durchbrechung 21 angeordnete zweite Gewindegänge 22 eingreifen.

In weiterer Ausgestaltung ist der Exzenter 13 in dem Gehäuse 16 über einen Zentrierbund 23 drehgeführt angeordnet, und ferner ist zur Unterstützung einer kompakten Bauweise der freien Stirnfläche 24 des Zentrierbundes 23 gegenüber im Gehäuse 16 ein schaltbarer Elektromagnet 25 als Servomotor 15 angeordnet. In einem Auge 26 des Schwenkarmes 11 ist eine auf den Exzenter 13 derart treibend einwirkende Schraubendrehfeder 27 angeordnet, dass der Exzenter 13 über das Steilgewinde 14 bei unbestromtem Elektromagneten 25 zum einen zu diesem auf Hub- Distanz gehalten und zum anderen zugleich in eine das Reibrad 8 in Wirkeingriff mit dem Antriebsrad 9 der Kühlmittelpumpe 4 haltend Position gedreht ist.

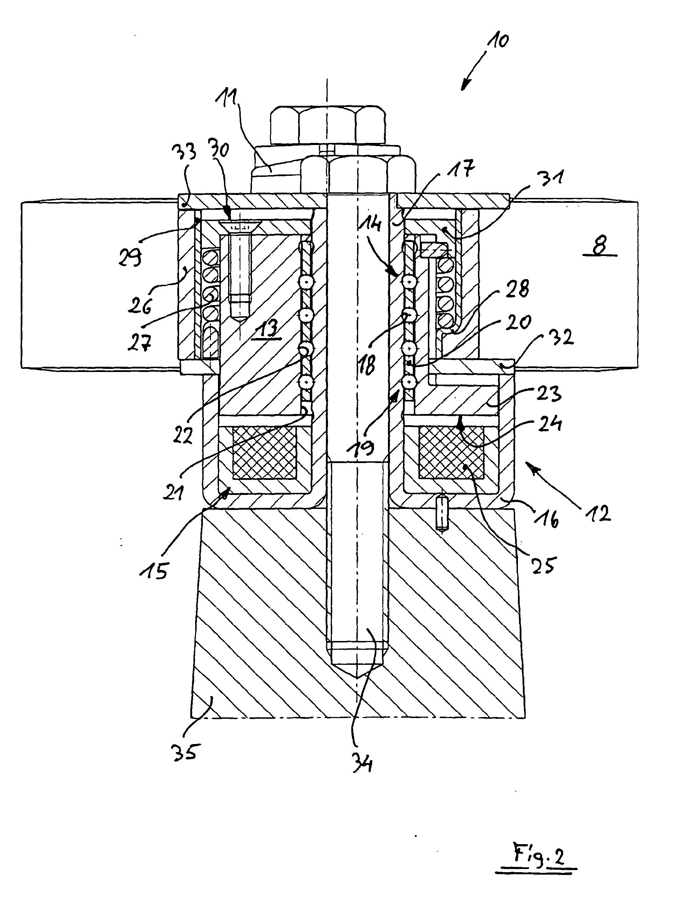

Eine der kompakten Bauweise der Steuereinrichtung 10 förderliche Anordnung sieht vor , dass die in dem Auge 26 des aus einem Kunststoff gebildeten Schwenkarmes 11 gegen einen Absatz 28 eines in dem Auge 26 zur Verstärkung angeordneten Metallgehäuses 29 einerseits anliegende Schraubendrehfeder 27 andererseits über einen in dem Metallgehäuse 29 mit Spiel zentrierten und mit dem Exzenter 13 über eine Verschraubung 30 verbundenen Deckel 31 axialgesichert gehalten ist. Wie aus Fig.2 ersichtlich, ist die mit einer Drehvorspannung angeordnete Schraubendrehfeder 27 einenends mit dem Exzenter 13 und andernends mit dem Auge 26 des Schwenkarmes 11 jeweils drehfest verbunden.

Die vorbeschriebene Federanordnung ermöglicht eine hohe Betriebssicherheit dadurch, dass mittels der Schraubendrehfeder 27 über ihre Drehvorspannung bei stromlosen Elektromagneten 25 der Exzenter 13 über das Steilgewinde 14 in eine Position gedreht ist, mittels der das äquidistant zum Triebrad 6 auf der Riemenaußenseite 7 geführte Reibrad 8 unter Zugbelastung des Schwenkarmes 11 in reibschlüssigen Eingriff mit dem Antriebsrad 9 gebracht und gehalten ist. Bei Ausfall des Servomotors 15 bzw. des Elektromagneten 25 bleibt die Kühlmittelpumpe 4 somit in vorteilhafter Weise in Antriebsverbindung über das Reibradgetriebe 3 mit dem Riementrieb 1. Die erfindungsgemäß bevorzugte Zugbelastung des Schwenkarmes 11 für den reibschlüssigen Eingriff des Reibrades 8 mit dem Antriebsrad 9 erlaubt in vorteilhafter Weise einen leichtbauenden Schwenkarm 11.

Demgegenüber ist bei bestromtem Elektromagneten 25 bzw. aktiviertem Servomotor 15 der Exzenter 13 über das Steilgewinde 14 in eine Gegenposition gedreht derart, dass das Reibrad 8 über den Schwenkarm 11 außer Eingriff mit dem Antriebsrad 9 gebracht und gehalten ist, wobei mittels der auf den Schwenkarm 11 über ihre Drehvorspannung einwirkende Schraubendrehfeder 27 das Reibrad 8 gegen die Riemenaußenseite 7 äquidistant im Umschlingungsbereich des Triebrades 6 geführt angedrückt ist zum reibschlüssigen Freilauf des Reibrades 8. Damit ist zum einen eine die reibschlüssige Mitnahme des Reibrades 8 störende Verschmutzung der Riemenaußenseite 7 unterbunden und zum anderen ist beim gesteuerten Eingriff des Reibrades 8 mit dem Antriebsrad 9 lediglich die Kühlmittelpumpe 4 einer Drehbeschleunigung ausgesetzt.

Im weiteren ist zur Kapselung des Auges 26 servomotorseitig ein mit dem Exzenter 13 drehfest verbundener Deckel 32 vorgesehen und andererseits ein auf dem Rohrfortsatz 17 stirnseitig aufliegender, drehfest gesicherter Abschlussdeckel 33 , wobei die gesamte Steuereinrichtung 10 einschließlich des das Reibrad 8 tragenden Schwenkarmes 11 mittels eines die Deckel 31 , 32 , 33 und den Rohrfortsatz 17 durchsetzenden Schraubbolzen 34 an einem maschinenseitigen Butzen 35 stirnseitig der Brennkraftmaschine 2 im freien Bereich zwischen Triebrad 6 und benachbartem Antriebsrad 9 der Kühlmittelpumpe 4 angeordnet ist. Diese vorteilhafte Platzausnutzung ist mit der erfindungsgemäß kleinbauenden Steuereinrichtung 10 erzielt.

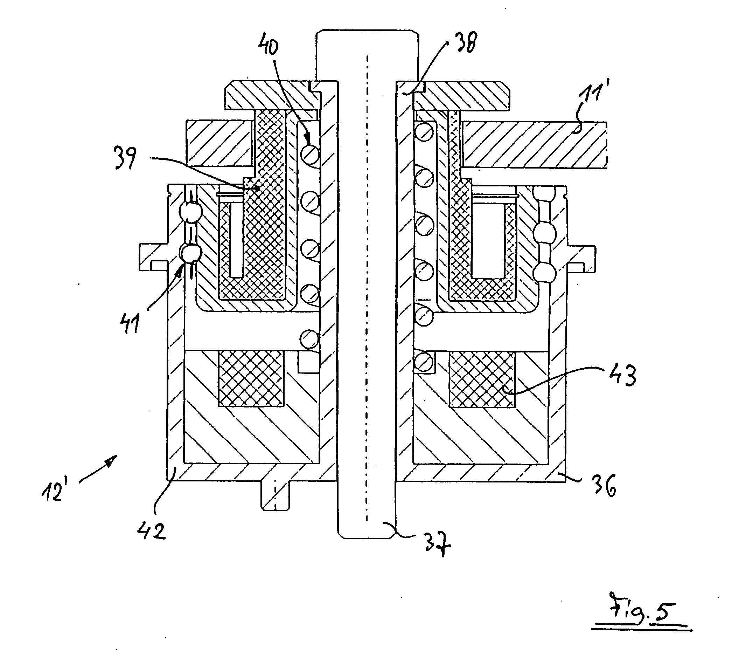

Figur 5 zeigt in einer Abwandlung eine Steuereinrichtung 10', bei der die Aufnahme 12' ein topfartiges Gehäuse 36 ist mit einem zentrischen, von einem Befestigungsbolzen 37 durchsetzten Rohrfortsatz 38, zu dem koaxial eine auf den Exzenter 39 einwirkende Druckfeder 40 angeordnet ist, wobei der Exzenter 39 über ein zwischengeschaltetes Kugel - Steilgewinde 41 zwischen seinem Außenumfang und dem Innenumfang der Außenwandung 42 des Gehäuses 36 geführt dreh - und hubbeweglich mittels eines Servomotors 43 in Wirkverbindung mit der Druckfeder 40 angeordnet ist.

Wie bereits weiter vorne ausgeführt, ist das Nebenaggregat 4 vorzugsweise eine der Brennkraftmaschine 2 dienende Kühlmittelpumpe, deren über die Mechanik der jeweiligen Steuereinrichtung 10 , 10' in Eingriff mit dem Kühlmittelpumpen - Antriebsrad 9 gesteuertes und in Eingriff gehaltenes Reibrad 8 bedarfsweise entweder durch einen Parameter der Brennkraftmaschine 2 oder durch ein Kennfeld einer Motronic angesteuerten Servomotor 15 außer Eingriff gebracht ist. Dies kann insbesondere bei Kaltstart der Brennkraftmaschine 2 sein, ferner ist es auch in deren Hochdrehzahlbereich denkbar, vorzugsweise in einer intermittierendem Zu - und Abschaltung .

## Patentansprüche

1. Aggregate-Riementrieb einer Brennkraftmaschine mit einem Reibradgetriebe mit Steuereinrichtung und Nebenaggregat,
- wobei das Reibradgetriebe (3) umfasst ein in einem Umschlingungsbereich eines Riemens (5) eines Triebrades (6) der Brennkraftmaschine (2) oder eines sonstigen Aggregates mit der Außenseite (7) des Riemens (5) reibschlüssig zusammenwirkendes Reibrad (8) sowie ein mit diesem Reibrad (8) reibschlüssig antreibbares Antriebsrad (9) des Nebenaggregates (4), **dadurch gekennzeichnet, dass**
- das Reibrad (8) mittels einer Steuereinrichtung (10, 10') bedarfsweise in und außer Eingriff mit dem Riemen (5) oder dem Antriebsrad (9) gesteuert ist,
- das Reibrad (8) über einen Schwenkarm (11, 11') mit einem in einer brennkraftmaschinenseitig fixierten Aufnahme (12, 12') angeordneten Exzenter (13, 39) der Steuereinrichtung (10, 10') in Verbindung steht, wobei
- der Exzenter (13, 39) in der Aufnahme (12, 12') über ein Steilgewinde (14, 41) geführt angeordnet ist derart, dass
- eine aus der gegen einen Federwiderstand mittels eines Servomotors (15, 43) der Steuereinrichtung (10, 10') bewirkten Hubbewegung des Exzenters (13, 39) zwangsweise gekoppelte Drehbewegung des Exzenters (13, 39) der Steuerung des mit dem Reibrad (8) verbundenen Schwenkarmes (11, 11') für eine Zu-/Abschaltung des Nebenaggregates (4) dient.

2. Aggregate-Riementrieb nach Anspruch 1, **dadurch gekennzeichnet,**
- **dass** die Aufnahme (12) ein topfartiges Gehäuse (16) ist mit einem zentrischen Rohrfortsatz (17) mit am Außenumfang angeordneten ersten Gewindegängen (18) für ein Kugelgewinde (19), wobei die
- in einem zylindrischen Käfig (20) gesicherten Gewindekugeln in am Innenumfang einer den Exzenter (13) durchsetzenden Durchbrechung (21) angeordnete zweite Gewindegänge (22) eingreifen.

3. Aggregate-Riementrieb nach Anspruch 2, **dadurch gekennzeichnet,**
- **dass** der Exzenter (13) in dem Gehäuse (16) über einen Zentrierbund (23) drehgeführt angeordnet ist, und
- **dass** der freien Stirnfläche (24) des Zentrierbundes (23) gegenüber im Gehäuse (16) ein schaltbarer Elektromagnet (25) als Servomotor (15) angeordnet ist, wobei
- der Exzenter (13) relativ zum unbestromten Elektromagneten (25)/Servomotor (15) mittels einer in einem Auge (26) des Schwenkarmes (11) auf den Exzenter (13) antreibend einwirkenden Schraubendrehfeder (27) auf Distanz gehalten ist.

4. Aggregate-Riementrieb nach den Ansprüchen 2 - 3, **dadurch gekennzeichnet,**
- **dass** die in dem Auge (26) des aus einem Kunststoff gebildeten Schwenkarmes (11) gegen einen Absatz (28) eines in dem Auge (26) angeordneten Metallgehäuses (29) einerseits anliegende Schraubendrehfeder (27) andererseits über
- einen in dem Metallgehäuse (29) des Auges (26) mit Spiel zentrierten und mit dem Exzenter (13) über eine Verschraubung (30) verbundenen Deckel (31) axial gesichert gehalten ist, wobei
- die mit einer Drehvorspannung angeordnete Schraubendrehfeder (27) einenends mit dem Exzenter (13) und anderenends mit dem Auge (26) des Schwenkarmes (11) jeweils drehfest verbunden ist.

5. Aggregate-Riementrieb nach den Ansprüchen 2 - 4, **dadurch gekennzeichnet,**
- **dass** mittels der Schraubendrehfeder (27) über ihre Drehvorspannung bei stromlosem Elektromagneten (25)/Servomotor (15) der Exzenter (13) über das Steilgewinde (14) in eine Position gedreht ist, mittels
- der das äquidistant zum jeweiligen Triebrad (6) geführte Reibrad (8) unter Zugbelastung des Schwenkarmes (11) in reibschlüssigen Eingriff mit dem. Antriebsrad (9) gebracht und gehalten ist.

6. Aggregate-Riementrieb nach den Ansprüchen 2 - 5, **dadurch gekennzeichnet,**
- **dass** der Exzenter (13) bei bestromtem Elektromagneten (25) über das Steilgewinde 814) in eine Gegenposition gedreht ist derart, mittels
- der das Reibrad (8) über den Schwenkarm (11) außer Eingriff mit dem Antriebsrad (9) gebracht und gehalten ist, wobei
- mittels der auf den Schwenkarm (11) über ihre Drehvorspannung einwirkende Schraubendrehfeder (27) das Reibrad (8) gegen die Riemenaußenseite (7) äquidistant im Umschlingungsbereich des jeweiligen Triebrades (6) geführt angedrückt ist zum reibschlüssigen Freilauf.

7. Aggregate-Riementrieb nach den Ansprüchen 2 - 6, **dadurch gekennzeichnet,**
- **dass** zur Kapselung des Auges (26) servomotorseitig ein mit dem Exzenter (13) drehfest verbundener Deckel (32) vorgesehen ist, und
- **dass** andererseits ein auf dem Rohrtortsatz (17) stirnseitig aufliegender, drehfest gesicherter Abschlussdeckel (33) angeordnet ist, wobei
- die gesamte Steuereinrichtung (10) mittels eines die Deckel (31, 32, 33) und den Rohrfortsatz (17) durchsetzenden Schraubbolzens (34) an einem maschinenseitigen Butzen (35) angeordnet ist.

8. Aggregate-Riementrieb nach Anspruch 1, **dadurch gekennzeichnet,**
- **dass** die Aufnahme (12') ein topfartiges Gehäuse (36) ist mit einem zentrischen, von einem Befestigungsbolzen. (37) durchsetzten Rohrfortsatz (38), zu dem
- koaxial eine auf den Exzenter (39) axial einwirkende Druckfeder (40) angeordnet ist, wobei
- der Exzenter (13) über ein zwischengeschaltetes Kugel-Steilgewinde (41) zwischen seinem Außenumfang und dem Innenumfang der Außenwandung (42) des Gehäuses (36) geführt dreh- und hubbeweglich mittels eines Servomotors (43) in Verbindung mit der Druckfeder (40) angeordnet ist.

9. Aggregate-Riementrieb nach den Ansprüchen 2 - 8, **dadurch gekennzeichnet,**
- **dass** das Nebenaggregat (4) eine der Brennkraftmaschine (2) dienende Kühlmittelpumpe ist, wobei
- das Reibrad (8) außer Eingriff mit dem Antriebsrad (9) mittels des Servomotors (15) über einen Parameter der Brennkraftmaschine (2) oder über ein in einer Motronic abgelegtes Kennfeld gesteuert ist, wobei der
- Servomotor (15) ein schaltbarer Elektromagnet (25) ist.

## Claims

1. A unit belt drive of an internal combustion engine comprising a friction gear with a control device and a sub-unit,
- wherein the friction gear (3) comprises a friction wheel (8) frictionally co-operating with the outside (7) of a belt drive in a loop region thereof, the belt (5) belonging to a drive wheel (6) of the internal combustion engine (2) or of another unit, and also comprises a driving wheel (9) frictionally drivable by the friction wheel (8) and belonging to the sub-unit (4), **characterised in that**
- the friction wheel (8), via a control device (10, 10') is brought into and out of engagement with the belt (5) or the driving wheel (9) as required,
- the friction wheel (8), via a swivel arm (11, 11'), is connected to an eccentric (13, 39) of the control device (10, 10') disposed in a receiver (12, 12') fixed to the engine, wherein
- the eccentric (13, 39) is guided in the receiver (12, 12') by a quick-acting screw thread (14, 41), such that
- automatically couples rotation of the eccentric (13, 39) of the control means of the swivel arm (11, 11') connected to the friction wheel (8), resulting from the reciprocating movement of the eccentric (13, 39) caused by a servomotor (15, 43) of the control device (10, 10') against spring resistance, is used for switching the sub-unit (4) off and on.

2. A unit belt drive according to claim 1 , **characterised in that**
- the receiver (12) is a pot-like casing (16) comprising a central tubular extension (17) with first screw threads (18) disposed on the outer periphery for a ball screw (19), wherein
- the balls, secured in a cylindrical cage (20), engage in second screw threads (22) disposed on the inner periphery of an aperture (21) through the eccentric (13).

3. A unit belt drive according to claim 2, **characterised in that**
- the eccentric (13) is guided in rotation in the casing (16) via a centring collar (23) and
- a servomotor (15) in the form of a switchable electromagnet (25) is disposed in the casing (16) opposite the free end face (24) of the centring collar (23), wherein
- the eccentric (13), relative to the electromagnet (25) or servomotor (15) when not energised, is held at a distance by a helical torsion spring (27) acting on and driving the eccentric (13) in an eyelet (26) of the swivel arm (11).

4. A unit belt drive according to claims 2 and 3, **characterised in that**
- the helical torsion spring (27), which at one end abuts a heel (28) of a metal casing (29) disposed in the eyelet (26), in the eyelet (26) of the swivel arm (11), which is made of plastic,
- is axially held and secured at the other end by a cover (31) connected by screws (30) to the eccentric (13) and centred with clearance in the middle casing (29) of the eyelet (26), wherein
- the helical torsion spring (27), which is prestressed in rotation, is co-rotatably connected at one end to the eccentric (13) and at the other end to the eyelet (26) of the swivel arm (11).

5. A unit belt drive according to claims 2 to 4, **characterised in that**
- by means of the rotary prestress on the helical torsion spring (27) when the electromagnet (25) or servomotor (15) is not energised, the eccentric (13) is rotated by the quick-acting screwthread (14) into a position by means of which
- the friction wheel (8), guided in equidistant manner relative to the respective drive wheel (6), is brought and held in frictional engagement with the driving wheel (9) under tensile loading by the swivel arm (11).

6. A unit belt drive according to claims 2 to 5,
**characterised in that** when the electromagnet (25) is energised, the eccentric (13) is rotated by the quick-acting screwthread (14) into a matching position,
- by means of which the friction wheel (8), via the swivel arm (11), is brought and held out of engagement with the driving wheel (9), wherein
- by means of the helical torsion spring (27) acting on the swivel arm (11) via its rotational prestress, the friction wheel (8) is pressed and guided against the outer side (7) of the belt in equidistant manner in the looped region of the respective driving wheel (6) so that it can run freely under friction.

7. A unit belt drive according to claims 2 to 6,
**characterised in that**
- a cover (32) co-rotatably connected to the eccentric (13) on the servomotor side is provided for encapsulating the eyelet (26) and
- on the other side a co-rotatably secured closing cover (33) bears on the end face of the tubular extension (17), wherein
- the entire control device is secured on a stub (35) of the invention by means of a screw bolt (34) extending through the covers (31, 32, 33) and the tubular extension (17).

8. A unit belt drive according to claim 1,
**characterised in that**
- the receiver (12') is a pot-like casing (36) with a central tubular extension (38) through which a fastening bolt (37) extends, and
- is disposed coaxially with a pressure spring (40) axially acting on the eccentric (39), wherein
- the eccentric (13) via an interposed ball and quick-acting screwthread (41) between its outer periphery and the inner periphery of the outer wall (42) of the casing (36) is guided in rotation and reciprocation by a servomotor (43) in conjunction with the pressure spring (40).

9. A unit belt drive according to claims 2 to 8,
**characterised in that**
- the sub-unit (4) is a coolant pump for the internal combustion engine (2),
- wherein the friction wheel (8) is brought out of engagement with the driving wheel (9) by the servomotor (15), using a parameter of the engine (2) or a performance graph deposited in a motronic, wherein
- the servomotor (15) is a switchable electromagnet (25).

## Revendications

1. Unité d'entraînement à courroie de moteur à combustion interne comportant une transmission à roue à friction et une installation de commande ainsi qu'un accessoire,
- la transmission à roue à friction (3) comprend une roue à friction (8) coopérant par friction avec le côté extérieur (7) de la courroie (5), dans la zone d'enveloppement de la courroie (5) d'une roue d'entraînement (6) du moteur à combustion (2) ou d'une autre unité, ainsi qu'une roue d'entraînement (9) de l'accessoire (4), entraînée par friction par cette roue à friction (8),
**caractérisée en ce que**
- la roue à friction (8) est commandée par une installation de commande (10, 10') pour être, à la demande, mise en prise ou hors de prise de la courroie (5) ou de la roue d'entraînement (9),
- la roue à friction (8) est reliée par un bras pivotant (11, 11') avec un excentrique (13, 39) de l'installation de commande (10, 10'), cet excentrique étant dans un logement (12, 12') fixe, côté moteur à combustion, et
- l'excentrique (13, 39) est monté de façon guidée dans le logement (12, 12') par un filetage à pas rapide (14, 41) de façon que,
- un mouvement de rotation couplé de force à un mouvement de translation de l'excentrique (13, 39) produit par un servomoteur (15, 43) de l'installation de commande (10, 10') contre une résistance de ressort, pour le bras pivotant (11, 11') relié à la roue à friction (8) serve au branchement/à la coupure de l'accessoire (4).

2. Unité d'entraînement à courroie selon la revendication 1,
**caractérisée en ce que**
- le logement (12) est un boîtier (16) en forme de pot, ayant un prolongement tubulaire centré (17) dont la périphérie extérieure est munie de premiers filets (18) pour une vis à billes (19),
- les billes de la vis étant fixées dans une cage cylindrique (20) venant en prise dans des seconds filets (22) de la périphérie intérieure d'un passage (21) traversant l'excentrique (13).

3. Unité d'entraînement à courroie selon la revendication 2,
**caractérisée en ce que**
- l'excentrique (13) est guidé en rotation dans le boîtier (16) par l'intermédiaire d'une collerette de centrage (23), et
- un électro-aimant (25) commutable fonctionnant comme servomoteur (15) est prévu au niveau de la surface frontale libre (24) de la collerette de centrage (23) en regard du boîtier (16), et dans celui-ci
- l'excentrique (13) est maintenu à distance par rapport à un électro-aimant (25) non alimenté/servomoteur (15) par l'intermédiaire d'un ressort hélicoïdal (27) agissant dans le sens de l'entraînement sur l'excentrique (13) par l'intermédiaire d'un oeillet (26) du bras pivotant (11).

4. Unité d'entraînement à courroie selon les revendications 2 et 3,
**caractérisée en ce que**
- le ressort hélicoïdal (27) est maintenu fixé axialement dans l'oeillet (26) du bras pivotant (11) en matière plastique, contre d'une part, un épaulement (28) d'un boîtier métallique (29) logé dans l'oeillet (26) et d'autre part, avec un couvercle (31) centré avec du jeu dans le boîtier métallique (29) de l'oeillet (26), et relié à l'excentrique (13) par un moyen de vissage (30), et
- le ressort hélicoïdal (27) installé avec précontrainte en rotation, est relié solidairement en rotation au niveau d'une extrémité avec l'excentrique (13) et au niveau de l'autre extrémité, avec l'oeillet (26) du bras pivotant (11).

5. Unité d'entraînement à courroie selon les revendications 2 à 4,
**caractérisée en ce que**
- l'excentrique (13) est tourné par l'intermédiaire de son filetage à pas rapide (14) dans une position par le ressort hélicoïdal (27) grâce à sa précontrainte de rotation lorsque l'électro-aimant (25) est coupé du courant/ servomoteur (15), position dans laquelle,
- la roue à friction (8) guidée de manière équidistante par rapport à la roue à friction (6) respective, est mise et maintenue en prise de friction avec la roue motrice (9) par la contrainte en traction du bras pivotant (11).

6. Unité d'entraînement à courroie selon les revendications 2 à 5,
**caractérisée en ce qu'**
- en cas d'électro-aimant (25) coupé du courant, l'excentrique (13) est tourné dans une position opposée par le filetage à pas rapide (814) de façon que,
- la roue à friction (8) est mise hors de prise par le bras pivotant (11) par rapport à la roue d'entraînement (9) et est maintenue ainsi et
- le ressort hélicoïdal (27) agissant sur le bras pivotant (11) par sa précontrainte en rotation, est pressé de manière guidée contre le côté extérieur (7) de la courroie, à équidistance dans la zone d'enveloppement de la roue d'entraînement (6) respective pour un fonctionnement en roue libre avec liaison par friction.

7. Unité d'entraînement à courroie selon les revendications 2 à 6,
**caractérisée en ce que**
- pour encapsuler l'oeillet (26) du côté du servomoteur, un couvercle (32) est relié solidairement en rotation à l'excentrique (13), et
- d'autre part, un couvercle de fermeture (33) fixé solidairement en rotation est appliqué sur le côté frontal du prolongement tubulaire (17), et
- l'ensemble de l'installation de commande (10) est prévu sur un relief (35) côté machine en étant fixé par une vis (34) traversant les couvercles (31, 32, 33) et le prolongement tubulaire (17).

8. Unité d'entraînement à courroie selon la revendication 1,
**caractérisée en ce que**
- le logement (12') est un boîtier (36) en forme de pot, muni d'un prolongement tubulaire (38) centré, traversant un goujon de fixation (37) et pour lequel,
- un ressort de compression (40) à action axiale est installé coaxialement sur l'excentrique (39) et pour lequel,
- l'excentrique (13) est installé par l'intermédiaire d'un filetage à pas rapide (41) à billes, interposé entre sa périphérie extérieure et la périphérie intérieure de la paroi extérieure (42) du boîtier (36), de manière guidée et mobile en rotation et en translation par l'intermédiaire d'un servomoteur (43) en liaison avec le ressort de compression (40).

9. Unité d'entraînement à courroie selon les revendications 2 à 8,
**caractérisée en ce que**
- l'accessoire (4) du moteur à combustion (2) est sa pompe de liquide de refroidissement dont
- la roue à friction (8) est mise hors de prise de la roue à friction (9) par l'intermédiaire du servomoteur (15) en fonction d'un paramètre du moteur à combustion (2) ou par une commande selon un champ de caractéristiques enregistrées dans l'électronique du moteur et
- le servomoteur (15) est un électro-aimant commutable (25).
